# NEW EUROPEAN PATENT SPECIFICATION

(11) **EP 3 990 391 B2**
(45) Date of publication and mention of the opposition decision: **14.10.2026**
(45) Mention of the grant of the patent: 09.08.2023
(21) Application number: 20732923.6
(22) Date of filing: 17.06.2020
(51) Int. Cl.: C01G 53/00

(54) **LITHIUM NICKEL OXIDE PARTICULATE MATERIAL, METHOD FOR ITS MANUFACTURE AND USE**
LITHIUM NICKEL OXID TEILCHENFÖRMIGES MATERIAL, VERFAHREN ZU DESSEN HERSTELLUNG UND VERWENDUNG
MATÉRIAU PARTICULAIRE D'OXYDE DE LITHIUM NICKEL, SON PROCÉDÉ DE FABRICATION ET D'UTILISATION

(30) Priority: 28.06.2019 EP 19183347
(43) Date of publication of application: 04.05.2022
(73) Proprietor: BASF SE, 67056 Ludwigshafen am Rhein (DE)
(72) Inventor: BERGNER, Benjamin Johannes Herbert, 67056 Ludwigshafen (DE); SOMMER, Heino, 67056 Ludwigshafen (DE); HARTMANN, Pascal, 67056 Ludwigshafen (DE); TEUFL, Tobias Maximilian, 85586 Poing (DE)
(74) Representative: BASF IP Association
(86) International application number: PCT/EP2020/066814
(87) International publication number: WO 2020/260102

(56) References cited:
- EP-A1- 3 439 084
- CN-A- 107 732 179
- CN-A- 107 742 717
- CN-A- 108 767 239
- KR-A- 20160 045 029
- US-A1- 2003 047 717
- US-A1- 2009 081 548
- US-A1- 2013 171 523
- XIE ET AL.: "A Mg-Doped High-Nickel Layered Oxide Cathode Enabling Safer, High-Energy-Density Li-Ion Batteries", CHEMISTRY OF MATERIALS, vol. 31, 2019, XP055950963, DOI: 10.1021/acs.chemmater.8b03900
- PARK, H.R.: "Electrochemical properties of LiNiO"2 and LiNiO"2 substituted with Ga, Al and/or Ti", JOURNAL OF INDUSTRIAL AND ENGINEERING CHEMISTRY, THE KOREAN SOCIETY OF INDUSTRIAL AND ENGINEERING CHEMISTRY, KOREA, vol. 16, no. 5, 25 September 2010 (2010-09-25), KOREA , pages 698 - 702, XP027229103, ISSN: 1226-086X
- SONG MYOUNG YOUP, MUMM DANIEL R., PARK CHAN KEE, PARK HYE RYOUNG: "Cycling performance of LiNi1−yMyO2 (M=Ni, Ga, Al and/or Ti) synthesized by wet milling and solid-state method", METALS AND MATERIALS INTERNATIONAL, THE KOREAN INSTITUTE OF METALS AND MATERIALS, SEOUL, vol. 18, no. 3, 1 June 2012 (2012-06-01), Seoul, pages 465 - 472, XP093190082, ISSN: 1598-9623, DOI: 10.1007/s12540-012-3013-3
- KWON SUNG NAM; SONG MYOUNG YOUP; PARK HYE RYOUNG: "Electrochemical properties of LiNiO2substituted by Al or Ti for Ni via the combustion method", CERAMICS INTERNATIONAL, ELSEVIER, AMSTERDAM., NL, vol. 40, no. 9, 7 June 2014 (2014-06-07), NL , pages 14141 - 14147, XP029017747, ISSN: 0272-8842, DOI: 10.1016/j.ceramint.2014.05.149
- YOON ET AL.: "Cation Ordering of Zr-Doped LiNiO2 Cathode for Lithium-Ion Batteries", CHEMISTRY OF MATERIALS, vol. 30, 2018, XP055653882, DOI: 10.1021/acs.chemmater.8b00619
- GENOVESE ET AL.: "Particle size determination of food suspensions; Application to cloudy apple juice", JOURNAL OF FOOD PROCESS ENGINEERING , vol. 23, 2000, XP055454768, DOI: 10.1111/j.1745-4530.2000.tb00525.x
- MAARTEN ALDERSTERN NULL: "Mean Particle Diameter, Part II: Standardization of Nomenclature", PART. SYST. CHARACT. , vol. 8, 1991, XP055277750, DOI: 10.1002/ppsc.19910080143
- DUBARRY MATTHIEU, ANSEÁN DAVID: "Best practices for incremental capacity analysis", FRONTIERS IN ENERGY RESEARCH, FRONTIERS RESEARCH FOUNDATION, CH, vol. 10, 3 October 2022 (2022-10-03), CH , pages 1 - 18, XP093190084, ISSN: 2296-598X, DOI: 10.3389/fenrg.2022.1023555
- LI HONGYANG, CORMIER MARC, ZHANG NING, INGLIS JULIE, LI JING, DAHN J. R.: "Is Cobalt Needed in Ni-Rich Positive Electrode Materials for Lithium Ion Batteries?", JOURNAL OF THE ELECTROCHEMICAL SOCIETY, ELECTROCHEMICAL SOCIETY., vol. 166, no. 4, 1 January 2019 (2019-01-01), pages A429 - A439, XP093097618, ISSN: 0013-4651, DOI: 10.1149/2.1381902jes
- BARSOUKOV E ET AL: "Comparison of kinetic properties of LiCoO"2 and LiTi"0"."0"5Mg"0"."0"5Ni"0"."7Co"0"."2O"2 by impedance spectroscopy", SOLID STATE IONICS, NORTH HOLLAND PUB. COMPANY. AMSTERDAM; NL, NL, vol. 161, no. 1-2, 1 July 2003 (2003-07-01), pages 19 - 29, XP004448181, ISSN: 0167-2738, DOI: 10.1016/S0167-2738(03)00150-4
- CHOWDARI B V R ET AL: "Cathodic behavior of (Co, Ti, Mg)-doped LiNiO"2", SOLID STATE IONICS, NORTH HOLLAND PUB. COMPANY. AMSTERDAM; NL, NL, vol. 140, no. 1-2, 1 March 2001 (2001-03-01), pages 55 - 62, XP004232138, ISSN: 0167-2738, DOI: 10.1016/S0167-2738(01)00686-5
- YU A ET AL: "Synthesis and properties of LiGa"xMg"yNi"1"-"x"-"yO"2 as cathode material for lithium ion batteries", SOLID STATE IONICS, NORTH HOLLAND PUB. COMPANY. AMSTERDAM; NL, NL, vol. 135, no. 1-4, 1 November 2000 (2000-11-01), pages 131 - 135, XP004221538, ISSN: 0167-2738, DOI: 10.1016/S0167-2738(00)00291-5

## Description

The present invention is directed towards a particulate material of the composition Li₁₊ₓTM₁₋ₓO₂ wherein
x is in the range of from -0.02 to + 0.05,
TM comprises at least 93 mol-% nickel and
   (A) at least one element M¹ wherein M¹ is selected from Nb, Ta, Ti, Zr, W and Mo,
   (B) at least one element M² wherein M² is selected from B, Al, Mg and Ga,
wherein said particulate material is comprised of spherical secondary particles that are agglomerates of primary particles, and
wherein said particulate material has an average particle diameter (D50) in the range of from 2 to 20 µm.

Lithiated transition metal oxides are currently being used as electrode active materials for lithium-ion batteries. Extensive research and developmental work has been performed in the past years to improve properties like charge density, specific energy, but also other properties like the reduced cycle life and capacity loss that may adversely affect the lifetime or applicability of a lithium-ion battery. Additional effort has been made to improve manufacturing methods.

Many electrode active materials discussed today are of the type of lithiated nickel-cobalt-manganese oxide ("NCM materials") or lithiated nickel-cobalt-aluminum oxide ("NCA materials").

In a typical process for making cathode materials for lithium-ion batteries, first a so-called precursor is being formed by co-precipitating the transition metals as carbonates, oxides or preferably as hydroxides that may or may not be basic. The precursor is then mixed with a lithium salt such as, but not limited to LiOH, Li₂O or - especially - Li₂CO₃ - and calcined (fired) at high temperatures. Lithium salt(s) can be employed as hydrate(s) or in dehydrated form. The calcination - or firing - generally also referred to as thermal treatment or heat treatment of the precursor - is usually carried out at temperatures in the range of from 600 to 1,000 °C. During the thermal treatment a solid state reaction takes place, and the electrode active material is formed. In cases hydroxides or carbonates are used as precursors the solid state reaction follows a removal of water or carbon dioxide. The thermal treatment is performed in the heating zone of an oven or kiln.

In order to improve the capacity of cathode active materials, it has been suggested to select as high a nickel content as possible. However, in materials such as LiNiO₂, it has been observed that poor cycle life, pronounced gassing and a strong increase of the internal resistance during cycling provide high challenges for a commercial application. KR 2016 0045029 A discloses lithium mixed oxide materials with a content of cobalt around 20 mol-%. US 2009/081548 A1 discloses an electrode material containing at least 8mol-% cobalt.

Accordingly, the particulate material as defined at the outset has been found, hereinafter also defined as inventive material or as material according to the current invention. The inventive material shall be described in more detail below.

Inventive material as a composition according to the formula Li₁₊ₓTM₁₋ₓO₂ wherein x is in the range of from -0.02 to + 0.05,
TM comprises at least 93 mol-% nickel and
(A) at least one element M¹ wherein M¹ is selected from Nb, Ta, Ti, Zr, W, and Mo,
(B) at least one element M² wherein M² is selected from B, Al, Mg and Ga,
wherein said particulate material has an average particle diameter (D50) in the range of from 2 to 20 µm.

This corresponds to the formula Li₁₊ₓTM₁₋ₓO₂ wherein TM is (Ni₁₋ₓ₁₋ₓ₂M¹ₓ₁M²ₓ₂) with x1 > 0 and x2 > 0 and x1 + x2 ≤ 0.07.

The inventive material will be described in more detail below.

The inventive material is comprised of spherical particles, that are particles having a spherical shape. Spherical particles shall include not just those which are exactly spherical but also those particles in which the maximum and minimum diameter of at least 90% (number average) of a representative sample differ by not more than 10%.

The inventive material has an average particle diameter (D50) in the range of from 2 to 20 µm, preferably from 5 to 16 µm. The average particle diameter can be determined, e. g., by light scattering or LASER diffraction or electroacoustic spectroscopy. The particles are usually composed of agglomerates from primary particles, and the above particle diameter refers to the secondary particle diameter.

The inventive material is comprised of secondary particles that are agglomerates of primary particles. Preferably, the inventive material is comprised of spherical secondary particles that are agglomerates of primary particles. Even more preferably, inventive material is comprised of spherical secondary particles that are agglomerates of spherical primary particles or platelets.

In one embodiment of the present invention, primary particles of inventive material have an average diameter in the range from 1 to 2000 nm, preferably from 10 to 1000 nm, particularly preferably from 50 to 500 nm. The average primary particle diameter can, for example, be determined by SEM or TEM. SEM is an abbreviation of scanning electron microscopy, TEM is an abbreviation of transmission electron microscopy, and XRD stands for X-ray diffraction.

In one embodiment of the present invention, the inventive material has a specific surface (BET), hereinafter also referred to as "BET surface", in the range of from 0.1 to 2.0 m²/g. The BET surface may be determined by nitrogen adsorption after outgassing of the sample at 200 °C for 30 minutes or more and beyond this accordance with DIN ISO 9277:2010.

TM is mostly nickel, for example at least 93 mol-%, preferably at least 95 mol-%. An upper limit of 99.5 mol-% is preferred.

Some metals are ubiquitous metals such as sodium, calcium or zinc, but such traces will not be taken into account in the description of the present invention. Traces in this context will mean amounts of 0.05 mol-% or less, referring to the total metal content TM.

TM is a combination of metals according to general formula (I)

(NiₐM¹_{b}M²_{c})_{1-d}M³_{d} (I)

with
M³ being selected from Mn and Co,
   a being in the range of from 0.95 to 0.995, preferably 0.97 to 0.995, more preferably from 0.98 to 0.995,
   b being in the range of from 0.002 to 0.04,
   c being in the range of from 0.002 to 0.02, and
   d being in the range of from zero to 0.02,
and a + b + c = 1. In a preferred embodiment, b ≤ c.
M¹ is selected from Nb, Ta, Ti, Zr, W, and Mo, and M² is selected from B, Al, Mg and Ga.

In one embodiment of the present invention, M¹ is Zr or Ti and M² is Al.

In one embodiment of the present invention M¹ is Ta or Nb and M² is Al or B.

In one embodiment of the present invention, M¹ and M² are homogeneously dispersed within the inventive material. That means that M¹ and M² are about uniformly distributed over the particles of inventive material.

In one embodiment of the present invention, at least one of M¹ and M² are enriched in the particle boundaries of particles of inventive material.

In a specific embodiment of the present invention, secondary particles of inventive material are coated with a metal oxide, preferably with a metal oxide that does not serve as a cathode active material. examples of suitable metal oxides are LiBO₂, B₂O₃, Al₂O₃, Y₂O₃, LiAlO₂, TiO₂, ZrO₂, Li₂ZrO₃, Nb₂O₅, LiNbO₃, Ta₂O₅, LiTaO₃.

In one embodiment of the present invention, inventive material has an integral peak width in the differential capacity plot (dQ)/(dV) between 4.1 and 4.25 V of at least 25 mV in the second charge cycle by at 0.2 C rate. Such inventive materials are particularly useful because they show a superior cycling stability and reduced resistance growth compared to materials with a more narrow peak width.

The differential capacity plot is typically calculated by differentiating the capacity Q vs. voltage V according to Eq. 1: $\left(dQ\right) / \left(dV\right) = \left({Q}_{t}-{Q}_{t - 1}\right) / \left({V}_{t}-{V}_{t - 1}\right)$ (Eq. 1) where Vₜ, Qt, are voltage V and capacity Q measured at the time t, and Vₜ₋₁ and Qₜ₋₁ are the corresponding voltage and capacity measured at the previous time t -1. At standard C rates of 0.1 -1 C, data points are typically measured every 30s - 60s, or after predefined voltage changes, for instance 5 mV. Data points can be additionally interpolated and smoothened by an appropriate software to improve the quality of the (dQ)/(dV) plot.

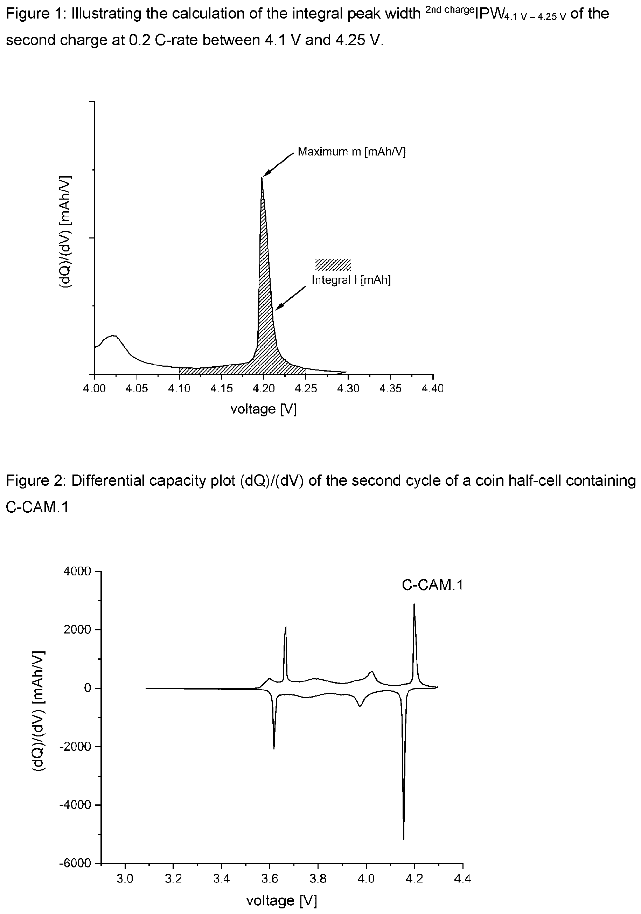

The integral peak width in the differential capacity (dQ)/(dV) of the second charge at 0.2 C-rate between 4.1 V and 4.25 V is defined by the integral I of the corresponding (dQ)/(dV) plot in the second charge between 4.1 V and 4.25 V divided by the maximum m of the corresponding (dQ)/(dV) plot in the second charge between 4.1 V and 4.25 V as illustrated in Figure 1 and defined in Eq. 2. $IPW 4.1 V - 4.25 V 2 nd charge = I / m$ (Eq. 2)

Inventive materials are particularly suitable as cathode active materials for lithium ion batteries. They combine good cycling stability with a high energy density.

In one embodiment of the present invention inventive cathode active material contains in the range of from 0.001 to 1 % by weight Li₂CO₃, determined by titration as Li₂CO₃ and referring to said inventive material.

Another aspect of the present invention relates to a process for making inventive materials, hereinafter also referred to as inventive process or process according to the (present) invention. The inventive process comprises several steps, hereinafter also referred to as step (a), step (b) etc.

Steps (a) to (e) are characterized as follows:
(a) providing a particulate nickel hydroxide, nickel (II) oxide or nickel oxyhydroxide,
(b) treating said nickel oxide/hydroxide with one or two solutions of compounds of M¹ and M²,
(c) optionally, removing the solvent(s) from step (b),
(d) adding a source of lithium,
(e) treating the mixture obtained from step (d) thermally.

Steps (a) to (e) are described in more detail below.

In step (a), a particulate nickel hydroxide, nickel (II) oxide or nickel oxyhydroxide is provided, hereinafter altogether also referred to as nickel oxide/hydroxide. In the context of the present invention, the term nickel oxyhydroxide is not limited to stoichiometric NiOOH but to any compound of nickel that bears only oxide and hydroxide counterions and a maximum individual content of impurities of 2% by weight of metals such as Mn or Mg, referring to the total metal content of said nickel hydroxide, nickel (II) oxide or nickel oxyhydroxide. Preferably, nickel hydroxide, nickel (II) oxide or nickel oxyhydroxide has a maximum total impurity content of 2% by weight, referring to the total metal content of said nickel hydroxide, nickel (II) oxide or nickel oxyhydroxide.

The nickel oxide/hydroxide provided in step (a) has an average particle diameter (D50) in the range of from 2 to 20 µm, preferably from 4 to 16 µm. The average particle diameter can be determined, e. g., by light scattering or LASER diffraction or electroacoustic spectroscopy. The particles may be composed of agglomerates from primary particles, and the above particle diameter refers to the secondary particle diameter.

A preferred nickel oxide/hydroxide is freshly precipitated nickel hydroxide.

In one embodiment of the present invention, the nickel oxide/hydroxide provided in step (a) has a residual moisture content in the range of from 50 to 1,000 ppm, preferably from 100 to 400 ppm. The residual moisture content may be determined by Karl-Fischer titration.

In step (b), said nickel oxide/hydroxide with one or two solutions of M¹ and M². Suitable solvents depend on the kind of compound of M¹ and M².

Suitable compounds of M¹ are alkanolates or acetylacetonates of Ti, of Zr, of W, of Ta and of Nb, for example the ethoxides of Ti, Zr, Nb, W and of Ta, the isopropoxide of Ti and of Zr, the acetylacetonates of Zr, Mo and or W, the mixed acetylacetonate-ethoxide of Ta. Alkanolates of M¹ are well soluble in the corresponding alcohols. Examples of water-soluble compounds of M¹ are for instance but not limited to ammonium metatungstate (hydrate), ammonium orthomolybdate, ammonium heptamolybdate, ammonium dimolybdate, ammonium niobate oxalate, ammonium zirconium (IV) carbonate, either as such or as hydrates.

Suitable compounds of M² are Al₂(SO₄)₃, KAl(SO₄)₂, and Al(NO₃)₃, alkanolates of Al such as, but not limited to Al(C₂H₅O)₃, Al-tris-isopropoxide, Mg(NO₃)₂, Mg(SO₄)₂, MgC₂O₄, alkanolates of Mg such as, but not limited to Mg(C₂H₅O)₂, NaBO₂, H₃BO₃, B₂O₃, alkanolates of B such as, but not limited to B-tris-isopropoxide, Ga(NO₃)₃, Ga₂(SO₄)₃, alkanolates of Ga such as, but not limited to Ga(CH₃O)₃, Ga-tris-isopropoxide or mixed salts of at least 2 cations such as aluminum magnesium isopropoxide. A suitable solvent for Al₂(SO₄)₃, KAl(SO₄)₂, Al(NO₃)₃, Mg(NO₃)₂, Mg(SO₄)₂, MgC₂O₄, NaBO₂,H₃BO₃, B₂O₃, Ga(NO₃)₃, and Ga₂(SO₄)₃ is water. Alkanolates of M² are well soluble in the corresponding alcohols.

In one embodiment of the present invention, the counterions of M¹ and M² are the same or similar, e.g., two different alkanolate ions. In such embodiments, said nickel oxide/hydroxide may be treated with one solution that contains both M¹ and M².

In another embodiment of the present invention, the counterions of M¹ and M² are different, for example an alkoxide of M¹ and nitrate of Al. In such embodiments, said nickel oxide/hydroxide is treated subsequently with a solution that contain M¹ and with a solution that contains M².

In one embodiment of step (b), the solution used in step (b) contains 0.001 to 60 % by weight of compounds of M¹ or M². In another embodiment of step (b), the solution used in step (b) contains in total 0.002 to 70 % by weight of compounds of M¹ and M².

In one embodiment of the present invention, step (b) is performed at a temperature in the range of from 5 to 85 °C, preferred are 10 to 60 °C.

In one embodiment of the present invention, step (b) is performed at normal pressure. It is preferred, though, to perform step (b) under elevated pressure, for example at 10 mbar to 10 bar above normal pressure, or with suction, for example 50 to 250 mbar below normal pressure, preferably 100 to 200 mbar below normal pressure.

Step (b) may be performed, for example, in a vessel that can be easily discharged, for example due to its location above a filter device. Such vessel may be charged with nickel oxide/hydroxide from step (a) followed by introduction of solution of compound of M¹ and/or M². In another embodiment, such vessel is charged with a solution of compound of M¹ and/or M² followed by introduction of nickel oxide/hydroxide from step (a). In another embodiment, nickel oxide/hydroxide from step (a) and solution of compound of M¹ and/or M² are introduced simultaneously.

In one embodiment of the present invention, the volume ratio of nickel oxide/hydroxide/oxyhydroxide from step (a) and total solution of compound of M¹ and/or M² in step (b) is in the range of from 10:1 to 1:5, preferably from 10:1 to 1:1, even more preferably from 10:1 to 5:1.

Treatment of the nickel oxide/hydroxide with the solution of M¹ and/or M² may take place over a period of from 1 minute to 3 hours, preferably from 5 minutes to 1 hour, even more preferably from 5 to 30 minutes.

Step (b) may be supported by mixing operations, for example shaking or in particular by stirring or shearing, see below.

In one embodiment of the present invention, steps (b) and (c) are combined: In one embodiment of the present invention, step (b) is performed by slurrying said nickel oxide/hydroxide from step (a) in a solution containing M¹ followed by removal of the solvent by a solid-liquid separation method or by evaporation, step (c-1), and then re-slurrying the residue in a solution containing M², removing the respective solvent by a solid-liquid separation method or by evaporation, step (c-2), and drying at a maximum temperature in the range of from 50 to 450 °C.

In another embodiment of the present invention, step (b) is performed by slurrying said nickel oxide/hydroxide from step (a) in a solution containing M² followed by removal of the solvent by a solid-liquid separation method or by evaporation, step (c-1), and then re-slurrying the residue in a solution containing M¹, removing the respective solvent by a solid-liquid separation method or by evaporation, step (c-2), and drying at a maximum temperature in the range of from 50 to 450 °C.

In the optional step (c), solvent(s) is/are removed. Suitable embodiments of removal of solvents are solid-liquid separation methods, for example decanting and filtration, for example on a band filter or in a filter press.

In one embodiment of step (c), the slurry obtained in step (b) is discharged directly into a centrifuge, for example a decanter centrifuge or a filter centrifuge, or on a filter device, for example a suction filter or in a belt filter that is located preferably directly below the vessel in which step (b) is performed. Then, filtration is commenced.

In a particularly preferred embodiment of the present invention, steps (b) and (c) are performed in a filter device with stirrer, for example a pressure filter with stirrer or a suction filter with stirrer. At most 3 minutes after - or even immediately after - having combined starting material and solution(s) of M¹ and M² in accordance with step (b), removal of solvent is commenced by starting the filtration. On laboratory scale, steps (b) and (c) may be performed on a Büchner funnel, and steps (b) and (c) may be supported by manual stirring.

In a preferred embodiment, step (b) is performed in a filter device, for example a stirred filter device that allows stirring of the slurry in the filter or of the filter cake. By commencement of the filtration, for example pressure filtration or suction filtration, after a maximum time of 3 minutes after commencement of step (b), step (c) is started.

In one embodiment of the present invention, the solvent removal in accordance to step (c) has a duration in the range of from 1 minute to 1 hour.

In one embodiment of the present invention, stirring in step (b) - and (c), if applicable - is performed with a rate in the range of from 1 to 50 rounds per minute ("rpm"), preferred are 5 to 20 rpm.

In one embodiment of the present invention, filter media may be selected from ceramics, sintered glass, sintered metals, organic polymer films, non-wovens, and fabrics.

In one embodiment of the present invention, steps (b) and (c) are carried out under an atmosphere with reduced CO₂ and/or moisture content, e.g., a carbon dioxide and/or moisture content in the range of from 0.01 to 500 ppm by weight, preferred are 0.1 to 50 ppm by weight. The CO₂ and/or moisture content may be determined by, e.g., optical methods using infrared light. It is even more preferred to perform steps (b) and (c) under an atmosphere with a carbon dioxide and/or moisture content below detection limit for example with infrared-light based optical methods.

In one embodiment of the present invention, step (c) is performed by evaporating the solvents, preferably under reduced pressure. Such embodiments are preferred when the solvent(s) are organic solvents, e.g., ethanol or isopropanol.

In one embodiment of the present invention the solvent of the wet nickel oxide/hydroxide, treated with solutions of M¹ and M², is not removed and the wet nickel oxide/hydroxide is directly mixed with the lithium source, step (d), to enable ideal distribution of lithium. This option is in particular interesting if only water is used as solvent for step (b).

In one embodiment of the present invention, steps (b) and (c) are carried out under an atmosphere with reduced CO₂ content, e.g., a carbon dioxide content in the range of from 0.01 to 500 ppm by weight, preferred are 0.1 to 50 ppm by weight. The CO₂ content may be determined by, e.g., optical methods using infrared light. It is even more preferred to perform steps (b) and (c) under an atmosphere with a carbon dioxide content below detection limit for example with infrared-light based optical methods.

In one embodiment of the present invention, step (c) is performed by evaporating the solvents, preferably under reduced pressure. Such embodiments are preferred when the solvent(s) are organic solvents, e.g., ethanol or isopropanol.

A powdery residue is obtained from step (c) in embodiments wherein step (c) is performed.

In step (d), a source of lithium is added.

Examples of sources of lithium are Li₂O, LiOH, and Li₂CO₃, each water-free or as hydrate, if applicable, for example LiOH·H₂O. Preferred example is lithium hydroxide.

The amounts of source of lithium and of powdery residue is selected in a way that the molar ratio of Li and TM is (1+x) to 1, with x being in the range of from 0.98 to 1.05.

Said source of lithium is preferable in particulate form, for example with an average diameter (D50) in the range of from 3 to 10 µm, preferably from 5 to 9 µm.

Examples of suitable apparatuses for performing step (d) are high-shear mixers, tumbler mixers, plough-share mixers and free fall mixers.

In one embodiment of the present invention, step (d) is performed at a temperature in the range of from ambient temperature to 200 °C, preferably 20 to 50 °C.

A mixture is obtained.

Step (e) includes subjecting said mixture to a thermal treatment. Examples of step (e) are heat treatments at a temperature in the range of from 600 to 800 °C, preferably 650 to 750 °C. The terms "treating thermally" and "heat treatment" are used interchangeably in the context of the present invention.

In one embodiment of the present invention, the mixture obtained from step (d) is heated to 600 to 800 °C with a heating rate of 0.1 to 10 °C/min.

In one embodiment of the present invention, the temperature is ramped up before reaching the desired temperature of from 600 to 800°C, preferably 650 to 750 °C. For example, first the mixture obtained from step (d) is heated to a temperature to 350 to 550 °C and then held constant for a time of 10 min to 4 hours, and then it is raised to 650 °C up to 800 °C and then held at 650 to 800 for 10 minutes to 10 hours.

In one embodiment of the present invention, step (e) is performed in a roller hearth kiln, a pusher kiln or a rotary kiln or a combination of at least two of the foregoing. Rotary kilns have the advantage of a very good homogenization of the material made therein. In roller hearth kilns and in pusher kilns, different reaction conditions with respect to different steps may be set quite easily. In lab scale trials, box-type and tubular furnaces and split tube furnaces are feasible as well.

In one embodiment of the present invention, step (e) is performed in an oxygen-containing atmosphere, for example in a nitrogen-air mixture, in a rare gas-oxygen mixture, in air, in oxygen or in oxygen-enriched air. In a preferred embodiment, the atmosphere in step (d) is selected from air, oxygen and oxygen-enriched air. Oxygen-enriched air may be, for example, a 50:50 by volume mix of air and oxygen. Other options are 1:2 by volume mixtures of air and oxygen, 1:3 by volume mixtures of air and oxygen, 2:1 by volume mixtures of air and oxygen, and 3:1 by volume mixtures of air and oxygen.

In one embodiment of the present invention, step (e) is performed under a stream of gas, for example air, oxygen and oxygen-enriched air. Such stream of gas may be termed a forced gas flow. Such stream of gas may have a specific flow rate in the range of from 0.5 to 15 m³/h·kg material according to general formula Li₁₊ₓTM₁₋ₓO₂. The volume is determined under normal conditions: 298 Kelvin and 1 atmosphere. Said stream of gas is useful for removal of gaseous cleavage products such as water and carbon dioxide.

The inventive process may include further steps such as, but not limited, additional calcination steps at a temperature in the range of from 650 to 800 °C subsequently to step (e).

In one embodiment of the present invention, step (e) has a duration in the range of from one hour to 30 hours. Preferred are 10 to 24 hours. The time at a temperature above 600 °C is counted, heating and holding but the cooling time is neglected in this context.

A material is obtained that is excellently suitable as cathode active material for lithium ion batteries.

In one embodiment of the present invention, it is possible to treat inventive material with water and subsequently drying it. In another embodiment, it is possible to at least partially coat particles of inventive material, for example by mixing it with an oxide or hydroxide, for example with aluminum hydroxide or alumina or with boric acid, followed by thermal treatment at 150 to 400°C. In another embodiment of the present invention, it is possible to at least partially coat particles of inventive material by way of atomic layer deposition methods, for example by alternating treatment8s) with trimethylaluminum and moisture.

A further aspect of the present invention are electrodes comprising at least one inventive material. They are particularly useful for lithium ion batteries. Lithium ion batteries comprising at least one electrode according to the present invention exhibit a very good discharge and cycling behavior, and they show good safety behavior.

In one embodiment of the present invention, inventive cathodes contain
(A) at least one inventive material, as described above,
(B) carbon in an electrically conductive state, and
(C) a binder,
(D) a current collector.

In a preferred embodiment of the present invention, inventive cathodes contain
(A) 80 to 98 % by weight inventive material,
(B) 1 to 17 % by weight of carbon,
(C) 1 to 10 % by weight of binder material,
percentages referring to the sum of (A), (B) and (C).

Cathodes according to the present invention contain carbon in electrically conductive modification, in brief also referred to as carbon (B). Carbon (B) can be selected from soot, active carbon, carbon nanotubes, graphene, and graphite. Carbon (B) can be added as such during preparation of electrode materials according to the invention.

Electrodes according to the present invention can comprise further components. They can comprise a current collector (D), such as, but not limited to, an aluminum foil. They further comprise a binder material (C), hereinafter also referred to as binder (C). Current collector (D) is not further described here.

Suitable binders (C) are preferably selected from organic (co)polymers. Suitable (co)polymers, i.e. homopolymers or copolymers, can be selected, for example, from (co)polymers obtainable by anionic, catalytic or free-radical (co)polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homo-polyethylene, but also copolymers of ethylene which comprise at least 50 mol% of copolymerized ethylene and up to 50 mol% of at least one further comonomer, for example α-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, C₁-C₁₀-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol% of copolymerized propylene and up to 50 mol% of at least one further comonomer, for example ethylene and α-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, C₁-C₁₀-alkyl esters of (meth)acrylic acid, divinylbenzene, especially 1,3-divinylbenzene, 1,2-diphenylethylene and α-methylstyrene.

Another preferred binder (C) is polybutadiene.

Other suitable binders (C) are selected from polyethylene oxide (PEO), cellulose, carboxymethylcellulose, polyimides and polyvinyl alcohol.

In one embodiment of the present invention, binder (C) is selected from those (co)polymers which have an average molecular weight M_{w} in the range from 50,000 to 1,000,000 g/mol, preferably to 500,000 g/mol.

Binder (C) may be cross-linked or non-cross-linked (co)polymers.

In a particularly preferred embodiment of the present invention, binder (C) is selected from halogenated (co)polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders (C) are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Inventive electrodes may comprise 3 to 10% by weight of binder(s) (d), referring to the sum of component (a), component (b) and carbon (c).

A further aspect of the present invention is a battery, containing
(A) at least one cathode comprising inventive cathode active material (A), carbon (B), and binder (C),
(B) at least one anode, and
(C) at least one electrolyte.

Embodiments of cathode (1) have been described above in detail.

Anode (2) may contain at least one anode active material, such as carbon (graphite), TiO₂, lithium titanium oxide, silicon or tin. Anode (2) may additionally contain a current collector, for example a metal foil such as a copper foil.

Electrolyte (3) may comprise at least one non-aqueous solvent, at least one electrolyte salt and, optionally, additives.

Nonaqueous solvents for electrolyte (3) can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-C₁-C₄-alkylene glycols and in particular polyethylene glycols. Polyethylene glycols can here comprise up to 20 mol% of one or more C₁-C₄-alkylene glycols. Polyalkylene glycols are preferably polyalkylene glycols having two methyl or ethyl end caps.

The molecular weight M_{w} of suitable polyalkylene glycols and in particular suitable polyethylene glycols can be at least 400 g/mol.

The molecular weight M_{w} of suitable polyalkylene glycols and in particular suitable polyethylene glycols can be up to 5,000,000 g/mol, preferably up to 2,000,000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate.

Examples of suitable cyclic organic carbonates are compounds of the general formulae (II) and (III) 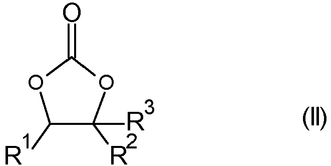 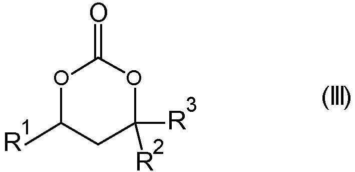 where R¹, R² and R³ can be identical or different and are selected from among hydrogen and C₁-C₄-alkyl, for example methyl, ethyl, n-propyl, isopropyl, n-butyl, isobutyl, sec-butyl and tert-butyl, with R² and R³ preferably not both being tert-butyl.

In particularly preferred embodiments, R¹ is methyl and R² and R³ are each hydrogen, or R¹, R² and R³ are each hydrogen.

Another preferred cyclic organic carbonate is vinylene carbonate, formula (IV).

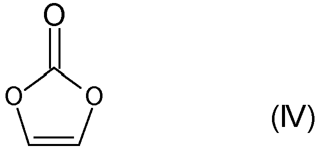

The solvent or solvents is/are preferably used in the water-free state, i.e. with a water content in the range from 1 ppm to 0.1% by weight, which can be determined, for example, by Karl-Fischer titration.

Electrolyte (3) further comprises at least one electrolyte salt. Suitable electrolyte salts are, in particular, lithium salts. Examples of suitable lithium salts are LiPF₆, LiBF₄, LiClO₄, LiAsF₆, LiCF₃SO₃, LiC(CₙF₂ₙ₊₁SO₂)₃, lithium imides such as LiN(CₙF₂ₙ₊₁SO₂)₂, where n is an integer in the range from 1 to 20, LiN(SO₂F)₂, Li₂SiF₆, LiSbF₆, LiAlCl₄ and salts of the general formula (CₙF₂ₙ₊₁SO₂)ₜYLi, where m is defined as follows:
t = 1, when Y is selected from among oxygen and sulfur,
t = 2, when Y is selected from among nitrogen and phosphorus, and
t = 3, when Y is selected from among carbon and silicon.

Preferred electrolyte salts are selected from among LiC(CF₃SO₂)₃, LiN(CF₃SO₂)₂, LiPF₆, LiBF₄, LiClO₄, with particular preference being given to LiPF₆ and LiN(CF₃SO₂)₂.

In a preferred embodiment of the present invention, electrolyte (3) contains at least one flame retardant. Useful flame retardants may be selected from trialkyl phosphates, said alkyl being different or identical, triaryl phosphates, alkyl dialkyl phosphonates, and halogenated trialkyl phosphates. Preferred are tri-C₁-C₄-alkyl phosphates, said C₁-C₄-alkyls being different or identical, tribenzyl phosphate, triphenyl phosphate, C₁-C₄-alkyl di- C₁-C₄-alkyl phosphonates, and fluorinated tri-C₁-C₄-alkyl phosphates,

In a preferred embodiment, electrolyte (3) comprises at least one flame retardant selected from trimethyl phosphate, CH₃-P(O)(OCH₃)₂, triphenylphosphate, and tris-(2,2,2-trifluoroethyl)phosphate.

Electrolyte (3) may contain 1 to 10% by weight of flame retardant, based on the total amount of electrolyte.

In an embodiment of the present invention, batteries according to the invention comprise one or more separators (4) by means of which the electrodes are mechanically separated. Suitable separators (4) are polymer films, in particular porous polymer films, which are unreactive toward metallic lithium. Particularly suitable materials for separators (4) are polyolefins, in particular film-forming porous polyethylene and film-forming porous polypropylene.

Separators (4) composed of polyolefin, in particular polyethylene or polypropylene, can have a porosity in the range from 35 to 45%. Suitable pore diameters are, for example, in the range from 30 to 500 nm.

In another embodiment of the present invention, separators (4) can be selected from among PET nonwovens filled with inorganic particles. Such separators can have a porosity in the range from 40 to 55%. Suitable pore diameters are, for example, in the range from 80 to 750 nm.

Batteries according to the invention can further comprise a housing which can have any shape, for example cuboidal or the shape of a cylindrical disk. In one variant, a metal foil configured as a pouch is used as housing.

Batteries according to the invention provide a very good discharge and cycling behavior, in particular at high temperatures (45 °C or higher, for example up to 60 °C) in particular with respect to the capacity loss.

Batteries according to the invention can comprise two or more electrochemical cells that combined with one another, for example can be connected in series or connected in parallel. Connection in series is preferred. In batteries according to the present invention, at least one of the electrochemical cells contains at least one electrode according to the invention. Preferably, in electrochemical cells according to the present invention, the majority of the electrochemical cells contain an electrode according to the present invention. Even more preferably, in batteries according to the present invention all the electrochemical cells contain electrodes according to the present invention.

The present invention further provides for the use of batteries according to the invention in appliances, in particular in mobile appliances. Examples of mobile appliances are vehicles, for example automobiles, bicycles, aircraft or water vehicles such as boats or ships. Other examples of mobile appliances are those which move manually, for example computers, especially laptops, telephones or electric hand tools, for example in the building sector, especially drills, battery-powered screwdrivers or battery-powered staplers.

### Brief description of the drawings:

Figure 1: Illustration of the calculation of the integral peak width ^{2nd charge}IPW_{4.1 V - 4.25 V} of the second charge at 0.2 C-rate between 4.1 V and 4.25 V.
Figure 2: Differential capacity plot (dQ)/(dV) of the second cycle of a coin half-cell containing C-CAM.1 and obtained by applying the cycling procedure listed in table 1.

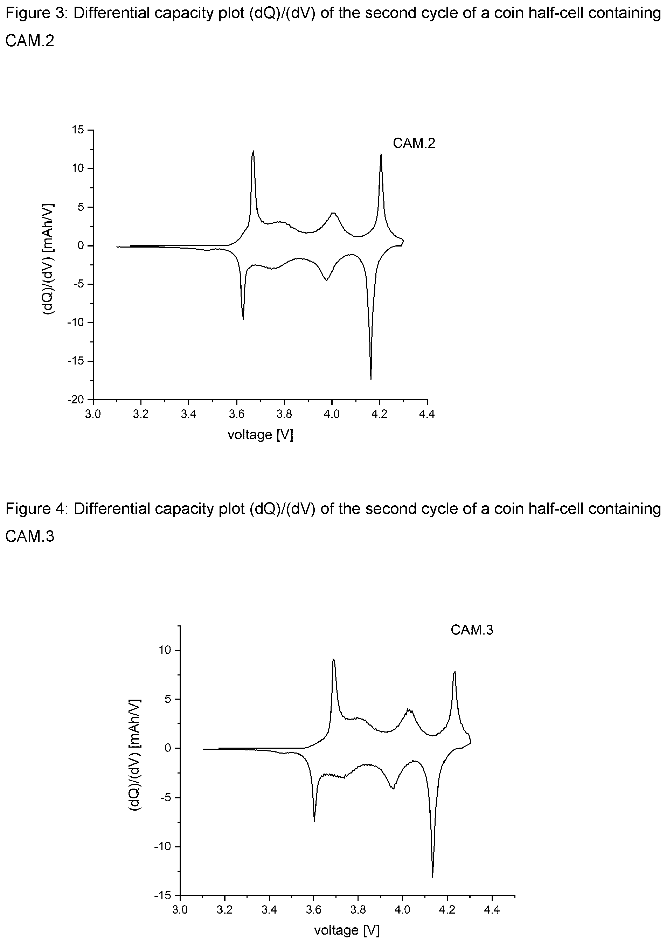

Figure 3: Differential capacity plot (dQ)/(dV) of the second cycle of a coin half-cell containing CAM.2 obtained by applying the cycling procedure listed in table 1.
Figure 4: Differential capacity plot (dQ)/(dV) of the second cycle of a coin half-cell containing CAM.3 obtained by applying the cycling procedure listed in table 1.

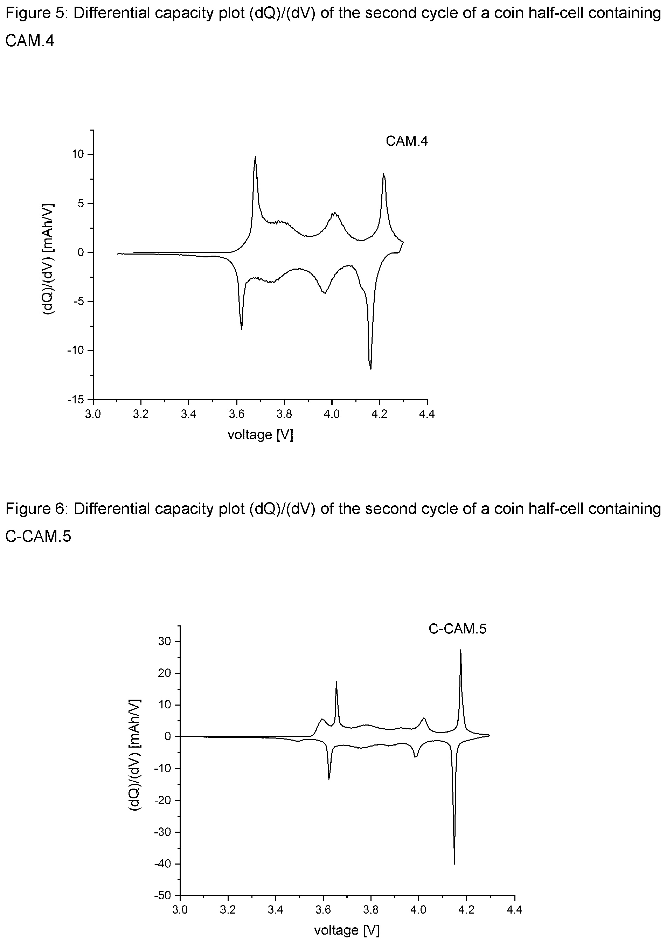

Figure 5: Differential capacity plot (dQ)/(dV) of the second cycle of a coin half-cell containing CAM.4 obtained by applying the cycling procedure listed in table 1.
Figure 6: Differential capacity plot (dQ)/(dV) of the second cycle of a coin half-cell containing C-CAM.5 obtained by applying the cycling procedure listed in table 1.

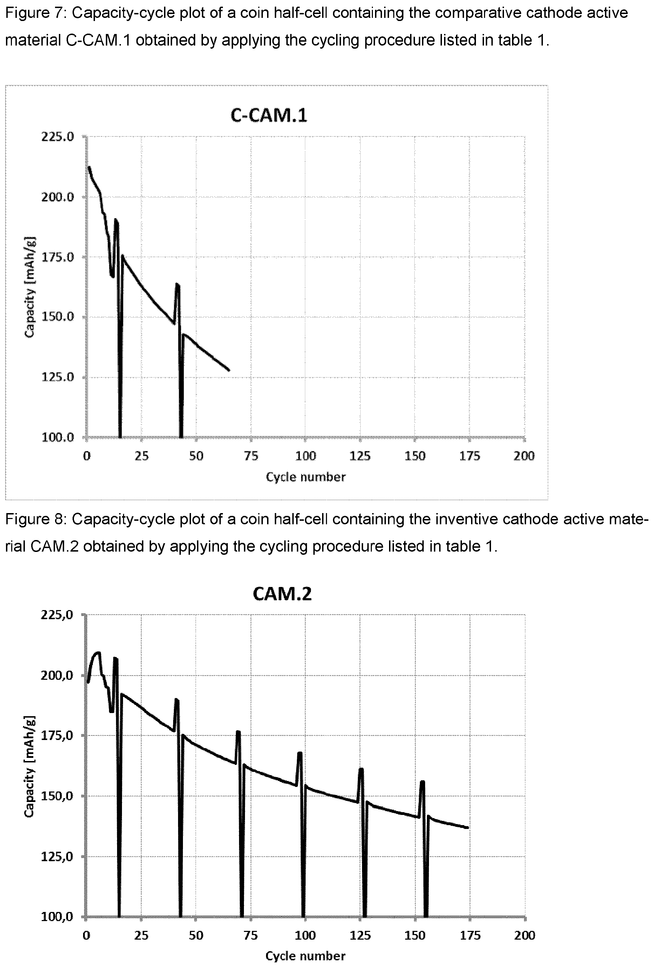

Figure 7: Capacity-cycle plot of a coin half-cell containing C-CAM.1 obtained by applying the cycling procedure listed in table 1.
Figure 8: Capacity-cycle plot of a coin half-cell containing CAM.2 obtained by applying the cycling procedure listed in table 1.

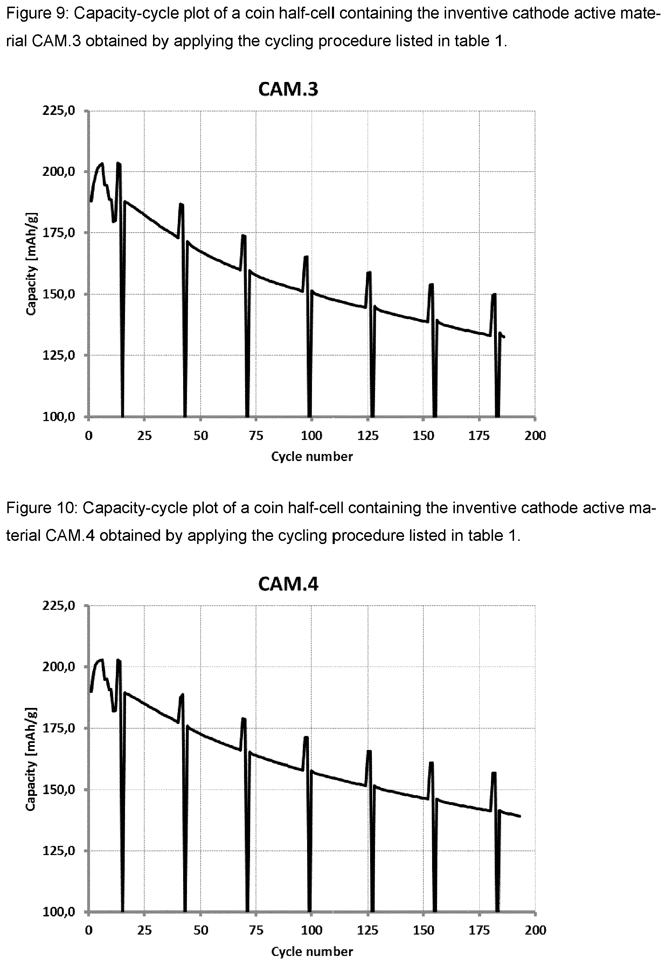

Figure 9: Capacity-cycle plot of a coin half-cell containing CAM.3 obtained by applying the cycling procedure listed in table 1.
Figure 10: Capacity-cycle plot of a coin half-cell containing CAM.4 obtained by applying the cycling procedure listed in table 1.

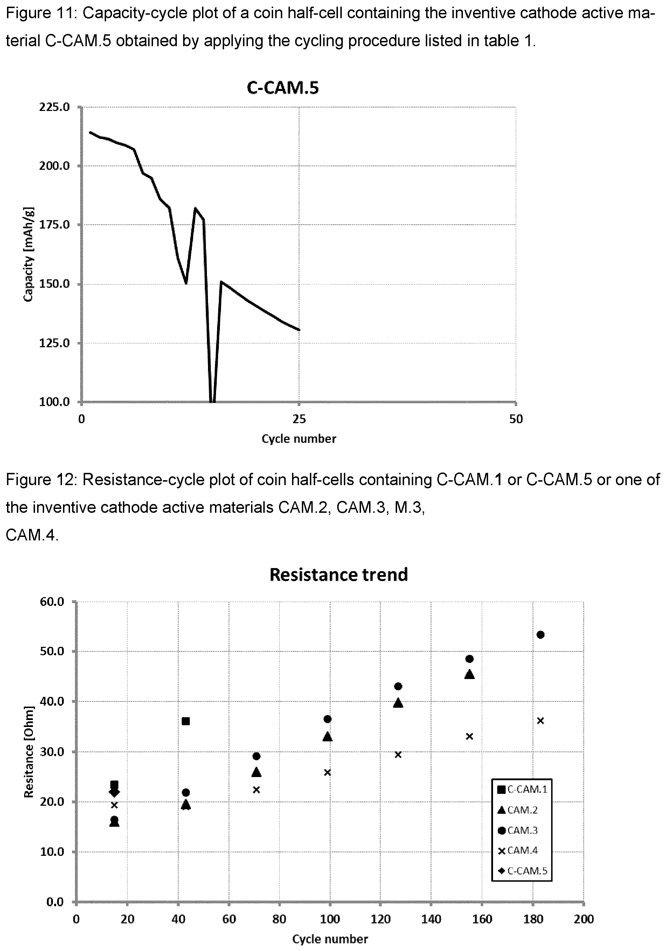

Figure 11: Capacity-cycle plot of a coin half-cell containing the inventive cathode active material C-CAM.5 obtained by applying the cycling procedure listed in table 1.
Figure 12: Resistance-cycle plot of coin half-cells containing the comparative cathode active material C-CAM.1 and the inventive cathode active materials CAM.2, CAM.3, and CAM.4 obtained by applying the cycling procedure listed in table 1.

The present invention is further illustrated by working examples.

Average particle diameters (D50) were determined by dynamic light scattering ("DLS"). Percentages are % by weight unless specifically noted otherwise.

Step (a.1): A spherical Ni(OH)₂ precursor was obtained by combining aqueous nickel sulfate solution (1.65 mol/kg solution) with an aqueous 25 wt.% NaOH solution and using ammonia as complexation agent. The pH value was set at 12.6. The freshly precipitated Ni(OH)₂ was washed with water, sieved and dried at 120 °C for 12 hours. Subsequently, the freshly precipitated Ni(OH)₂ was poured into an alumina crucible and dried in a furnace under oxygen atmosphere (10 exchanges/h) at 500 °C for 3 hours using a heating rate of 3 °C /min and a cooling rate of 10 °C /min to obtain the precursor p-CAM.1. p-CAM.1 was NiO with a D50 of 6 µm.

### Manufacture of a comparative cathode active material, C-CAM.1:

The dehydrated precursor p-CAM.1 was mixed with LiOH·H₂O in a molar ratio of Li:Ni of 1.01:1, poured into a alumina crucible and heated at 350 °C for 4 hours and 700 °C for 6 hours under oxygen atmosphere (10 exchanges/h) using a heating rate of 3 °C /min. The resultant material was cooled to ambient temperature at a cooling rate of 10 °C / min and subsequently sieved using a mesh size of 30 µm to obtain comparative material C-CAM.1 with a D50 of 6 µm.

### Manufacture of an inventive material, CAM.2:

Step (b.1.2): 100 g of the precursor p-CAM.1 were placed in a beaker. 0.98 g Al(NO₃)₃ nonahydrate and 0.32 g boric acid H₃BO₃ were dissolved in 35 ml deionized water. The resultant solution was added dropwise through a dropping funnel over 5 minutes at ambient temperature into the beaker until the precursor was soaked with liquid. No visible liquid film formed above the precursor p-CAM.1. The resultant slurry was stirred in the beaker over a period of 30 minutes. The individual amounts of Al, B and Ni were set to ensure a molar Ni:Al ratio of 0.991:0.002 and a molar Ni:B ratio of 0.991:0.004.

Step (c.1.2): Subsequently, the water was removed by heating the mixture for 6 hours at 120 °C under vacuum to obtain p-CAM.2.1.

Step (b.2.2): The p-CAM.2.1 obtained from (c.1.2) was placed in a beaker. 1.24 g niobium(V) ethoxide were dissolved in 28 ml dry ethanol. The resultant solution was added dropwise through a dropping funnel over 5 minutes at ambient temperature into the beaker until the precursor was soaked with liquid. No visible liquid film formed above the precursor p-CAM.2.1. The resultant slurry was stirred in the beaker over a period of 30 minutes. Step (b.2.2) was performed under a nitrogen atmosphere. The individual amounts of Nb and Ni were set to ensure a molar Ni:Nb ratio of 0.991:0.003.

Step (c.2.2): Subsequently the ethanol was removed by heating the slurry for 6 hours at 120 °C under vacuum to obtain p-CAM.2.2.

Steps (d.1.2) and (e.1.2): Precursor p-CAM.2.2 was mixed with LiOH·H₂O in a molar ratio of Li:(Ni+Nb+B+Al) of 1.01:1, poured into an alumina crucible and heated at 350 °C for 4 h and 700 °C for 6 hours under oxygen atmosphere (10 exchanges/h) with a heating rate of 3 °C /min and a cooling rate of 10 °C / min. The material so obtained was subsequently sieved using a mesh size of 30 µm to obtain inventive cathode active material CAM.2.

D50: 6 µm.

### Manufacture of an inventive material CAM.3:

Step (b.1.3): 100 g of the precursor p-CAM.1 were placed in a beaker. 1.80 g Ga(NO₃)₃ nitrate and 0.52 g ammonium heptamolybdate, (NH₄)₆Mo₇O₂₄, were dissolved in 35 ml deionized water. The resultant solution was added dropwise through a dropping funnel over 5 minutes at ambient temperature into the beaker until the precursor was soaked with liquid. No visible liquid film formed above the precursor p-CAM.1. The resultant slurry was stirred in the beaker over a period of 30 minutes. The individual amounts of Ga, Mo and Ni were set to ensure a molar Ni:Mo ratio of 0.991:0.002 and a molar Ni:Ga ratio of 0.991:0.004.

Step (c.1.3): Subsequently, the water was removed by heating the slurry for 6 hours at 120 °C under vacuum to obtain p-CAM.3.1.

Step (b.2.3): The p-CAM.3.1 obtained from (c.1.3) was placed in a beaker. 1.60 g tantalum(V) ethoxide were dissolved in 28 ml dry ethanol. The resultant solution was added dropwise through a dropping funnel over 5 minutes at ambient temperature into the beaker until the precursor was soaked with liquid. No visible liquid film formed above the precursor p-CAM.3.1. The resultant slurry was stirred in the beaker over a period of 30 minutes. Step (b.2.3) was performed under nitrogen atmosphere. The individual amounts of Ta and Ni were set to ensure a molar Ni:Ta ratio of 0.991:0.003.

Step (c.2.3): Subsequently the ethanol was removed by heating the slurry for 6 hours at 120 °C under vacuum to obtain the impregnated p-CAM.3.2.

Steps (d.3) and (e.3): Precursor p-CAM.3.2 was mixed with LiOH·H₂O in a molar ratio of Li:(Ni+Ta+Ga+Mo) of 1.01:1, poured into an alumina crucible and heated at 350 °C for 4 h and 700 °C for 6 hours under oxygen atmosphere (10 exchanges/h) with a heating rate of 3 °C /min and a cooling rate of 10 °C / min. The material so obtained was subsequently sieved using a mesh size of 30 µm to obtain inventive CAM.3. with a D50 of 6 µm.

### Manufacture of an inventive material CAM.4:

Step (b.1.4) and step (c.1.4): 0.68 g magnesium nitrate and 3.22 g ammonium zirconium (IV) carbonate were dissolved in 100 ml deionized water. The solution was filled into a dropping funnel and added dropwise over 5 minutes at ambient temperature onto an amount of 100g of precursor p-CAM.1 which was placed in a beaker until the precursor was soaked with liquid but before a visible liquid film formed above the precursor p-CAM.1. During this procedure the precursor p-CAM.1 was stirred in the beaker over a period of 30 minutes. Subsequently, the water was removed by heating the slurry for 6 hours at 120 °C under vacuum. The residual solution of magnesium and zirconium was added to the dried pCAM under similar conditions as listed above until the precursor was completely soaked with liquid again, but before a visible liquid film formed. Subsequently, the water was removed by heating the mixture again for 6 hours at 120 °C under vacuum. This procedure was repeated until all solution of zirconium and magnesium was consumed. After the final drying at 120 °C for 6 h, p-CAM.4.1 was obtained. The individual amounts of Mg and Zr and Ni were set to ensure a molar Ni:Mg ratio of 0.991:0.002 and a molar Ni:Zr ratio of 0.991:0.004.

Step (b.2.4): The p-CAM.4.1 obtained from (c.1.4) was placed in a beaker. 1.12 g titanium(IV)-isopropoxide were dissolved in 28 ml dry ethanol. The resultant solution was added dropwise through a dropping funnel over 5 minutes at ambient temperature into the beaker until the precursor was soaked with liquid. No visible liquid film formed above the precursor p-CAM.4.1. The resultant slurry was stirred in the beaker over a period of 30 minutes. Step (b.2.4) was completely performed under nitrogen atmosphere. The individual amounts of Ti and Ni were set to ensure a molar Ni:Ti ratio of 0.991:0.003.

Step (c.2.4): Subsequently the ethanol was removed by heating the mixture for 6 hours at 120 °C under vacuum to obtain the impregnated p-CAM.4.2.

Steps (d.4) and (e.4): Precursor p-CAM.4.2 was mixed with LiOH·H₂O in a molar ratio of Li:(Ni+Mg+Ti+Zr) of 1.01:1, poured into an alumina crucible and heated at 350 °C for 4 h and 700 °C for 6 hours under oxygen atmosphere (10 exchanges/h) with a heating rate of 3 °C /min and a cooling rate of 10°C/ min. The material so obtained was subsequently sieved using a mesh size of 30 µm to obtain inventive CAM.4. with a D50 of 6 µm.

### Manufacture of a comparative cathode active material, C-CAM.5:

Step C-(b.1.5): 100 g of the precursor p-CAM.1 were placed in a beaker. 6.54 g cobalt (II) nitrate were dissolved in 35 ml deionized water. The resultant solution was added dropwise through a dropping funnel over 5 minutes at ambient temperature into the beaker until the precursor was soaked with liquid. No visible liquid film formed above the precursor. The resultant slurry was stirred in the beaker over a period of 30 minutes. The individual amounts of Co and Ni were set to ensure a molar ratio of Ni:Co of 0.98:0.02.

Step C-(c.1.5): Subsequently, the water was removed by heating the mixture for 6 hours at 120 °C under vacuum to obtain comparative precursor p-CAM.5.

Steps C-(d.1.5) and (e.1.5): comparative precursor C-p-CAM.5 was mixed with LiOH· H2O in a molar ratio of Li:(Ni+Co) of 1.01:1, poured into an alumina crucible and heated at 350 °C for 4 h and 700 °C for 6 hours under oxygen atmosphere (10 exchanges/h) with a heating rate of 3 °C /min and a cooling rate of 10 °C / min. The material so obtained was subsequently sieved using a mesh size of 30 µm to obtain comparative cathode active material C-CAM.5. with a D50 of 6 µm.

Electrode manufacture: Electrodes contained 94% CAM, 3% carbon black (Super C65) and 3% binder (polyvinylidene fluoride, Solef 5130). Slurries were mixed in N-methyl-2-pyrrolidone and cast onto aluminum foil by doctor blade. After drying of the electrodes 6 h at 105 °C in vacuo, circular electrodes were punched, weighed and dried at 120 °C under vacuum for 12 hours before entering in an Ar filled glove box.

Half-Cell Electrochemical Measurements: Coin-type electrochemical cells, were assembled in an argon-filled glovebox. The positive 14 mm diameter (loading 8.0±0.5 mg cm⁻²) electrode was separated from the 0.58 thick Li foil by a glass fiber separator (Whatman GF/D). An amount of 95 µl of 1 M LiPF₆ in ethylene carbonate (EC): ethylmethyl carbonate (EMC), 3:7 by weight, was used as the electrolyte. Cells were galvanostatically cycled at a Maccor 4000 battery cycler between 3.1 and 4.3 V at room temperature by applying the following C-rates until 70 % of the initial discharge capacity is reached at a certain discharge step:

**Table 1: Electrochemical test procedure of the coin half cells.**

| | Charge | Discharge |
|---|---|---|
| Cycle 1 | 0.1 C | 0.1 C |
| Cycle 2-6 | 0.2 C+ CV* | 0.2 C |
| Cycle 7 & 8 | 0.5 C + CV* | 0.5 C |
| Cycle 9 & 10 | 0.5 C + CV* | 2.0 C |
| Cycle 11 & 12 | 0.5 C + CV* | 3.0 C |
| Cycle 13 & 14 | 0.5 C + CV* | 0.5 C |
| Cycle 15 | Resistance measurement | |
| Cycle 16-40 | 0.5 C + CV* | 1.0 C |
| Cycle 41 + 42 | 0.5 C + CV* | 0.5 C |
| Cycle 43 | Resistance measurement | |
| Cycle 44 - 68 | 0.5 C + CV* | 1.0 C |
| Cycle 69 + 70 | 0.5 C + CV* | 0.5 C |
| Cycle 71 | Resistance measurement | |
| Cycle 72 - 96 | 0.5 C + CV* | 1.0 C |
| Cycle 97 + 98 | 0.5 C + CV* | 0.5 C |
| Cycle 99 | Resistance measurement | |
| Cycle 100 - 124 | 0.5 C + CV* | 1.0 C |
| Cycle 125 + 126 | 0.5 C + CV* | 0.5 C |
| Cycle 127 | Resistance measurement | |
| Cycle 128 - 152 | 0.5 C + CV* | 1.0 C |
| Cycle 153 + 154 | 0.5 C + CV* | 0.5 C |
| Cycle 155 | Resistance measurement | |
| Cycle 156 - 180 | 0.5 C + CV* | 1.0 C |
| Cycle 181 + 182 | 0.5 C + CV* | 0.5 C |
| Cycle 183 | Resistance measurement | |
| Cycle 184 - 208 | 0.5 C + CV* | 1.0 C |

After charging at the listed C-rates, all charge step except the first were finished by a constant voltage step (CV*) for 1 h, or until the current reached 0.02C.

During cycling, data points were collected every 1 minute or after voltage changes of at least 5 mV occurred. 4 electrochemical cells were assembled for each of the materials, the corresponding cycling profile, capacity and resistance was obtained by averaging the 4 cells.

During the resistance measurement (conducted every 25 cycles at 25 °C), the cell was charged at 0.2 C to reach 50% state of charge, relative to the previous discharge capacity. To equilibrate the cell, a 30 min open circuit step followed. Finally, a 2.5 C discharge current was applied for 30 s to measure the resistance. At the end of the current pulse, the cell was again equilibrated for 30 min in open circuit and further discharged at 0.2 C to 3 .0 V.

To calculate the resistance, the voltage before applying the 2.5 C pulse current, V0s, and after 30 s of 2.5 C pulse current, V30 s, as well as the 2.5 C current value, (j in A), were taken. The resistance was calculated according to Eq. 3 (V: voltage, j: 2.5C pulse current). $R = \left(V0s-V30s\right) / j$ (Eq. 3)

**Table 2: Composition and electrochemical properties of comparative cathode active material C-CAM.1 and C-CAM. 5 and inventive cathode active materials CAM.2, CAM.3, and CAM.4**

| | C-CAM.1 | CAM.2 | CAM.3 | CAM.4 | C-CAM.5 |
|---|---|---|---|---|---|
| ^{2nd charge} IPW_{4.1 V - 4.25 V} [mv] | 17.1 | 40.5 | 49.1 | 51.0 | |
| Discharge capacity in cycle 5 [mAh/g] | 203 | 210 | 203 | 203 | 208 |
| Discharge capacity in cycle 25 [mAh/g] | 163 | 187 | 182 | 185 | 130 |
| Discharge capacity in cycle 50 [mAh/g] | 139 | 171 | 168 | 173 | n.d. |
| Discharge capacity in cycle 100 [mAh/g] | - | 155 | 152 | 158 | n.d. |
| resistance in cycle 15 [Ω] | 23 | 16 | 16 | 19 | 22 |
| resistance in cycle 43 [Ω] | 36 | 20 | 22 | 19 | n.d. |
| resistance in cycle 99 [Ω] | - | 26 | 29 | 22 | n.d. |
| n.d.: not determined | | | | | |

## Claims

1. Particulate material of the composition Li₁₊ₓTM₁₋ₓO₂ wherein
x is in the range of from -0.02 to + 0.05,
TM comprises at least 93 mol-% nickel and
(A) at least one element M¹ wherein M¹ is selected from Nb, Ta, Ti, Zr, W, and Mo,
(B) at least one element M² wherein M² is selected from B, Al, Mg and Ga,
wherein said particulate material is comprised of spherical secondary particles that are agglomerates of primary particles, and
wherein said particulate material has an average particle diameter (D50) in the range of from 2 to 20 µm.

2. Particulate material according to claim 1 wherein TM is a combination of metals according to general formula (I)
(NiₐM¹_{b}M²_{c})_{1-d}M³_{d} (I)
with
M³ being selected from Mn and Co,
a being in the range of from 0.95 to 0.995,
b being in the range of from 0.002 to 0.04,
c being in the range of from 0.002 to 0.02, and
d being in the range of from zero to 0.02, $a + b + c = 1 .$

3. Particulate material according to claim 1 or 2 wherein d is zero.

4. Particulate material according to any of the preceding claims wherein M¹ is Zr or Ti and M² is Al.

5. Particulate material according to any of claims 1 to 3 wherein M¹ is Ta or Nb and M² is Al or B.

6. Particulate material according to any of the preceding claims wherein said material has an integral peak width ^{2nd charge}IPW_{4.1 - 4.25 V} in the differential capacity plot (dQ)/(dV) of at least 25 mV between 4.1 and 4.25 V in the second charge cycle at 0.2 C-rate.

7. Particulate material according to any of the preceding claims wherein said material is coated with a metal oxide.

8. Particulate material according to any of the preceding claims wherein b ≤ c.

9. Process for manufacturing a particulate material according to any of claims 1 to 8 wherein said process comprises the following steps:
(a) providing a particulate nickel hydroxide, nickel (II) oxide or nickel oxyhydroxide,
(b) treating said nickel oxide/hydroxide or oxyhydroxide with one or two solutions of compounds of M¹ and M²,
(c) optionally, removing the solvent(s) from step (b),
(d) adding a source of lithium,
(e) treating the mixture obtained from step (d) thermally.

10. Process according to claim 9 wherein step (e) is performed at a maximum temperature in the range of from 650 to 750 °C.

11. Process according to claim 9 or 10 wherein step (c) is performed by a solid-liquid separation method.

## Patentansprüche

1. Partikelmaterial mit der Zusammensetzung Li₁₊ₓTM₁₋ₓO₂, wobei x in dem Bereich von -0,02 bis +0,05 liegt,
TM umfasst: wenigstens 93 mol-% Nickel und
(A) wenigstens ein Element M¹, wobei M¹ ausgewählt ist aus Nb, Ta, Ti, Zr, W und Mo,
(B) wenigstens ein Element M², wobei M² ausgewählt ist aus B, Al, Mg und Ga,
wobei das Partikelmaterial aus kugelförmigen Sekundärteilchen besteht, die Agglomerate von Primärteilchen sind, und
wobei das Partikelmaterial einen mittleren Partikeldurchmesser (D50) in dem Bereich von 2 bis 20 µm aufweist.

2. Partikelmaterial gemäß Anspruch 1, wobei TM eine Kombination von Metallen gemäß der allgemeinen Formel (I) ist,
(NiₐM¹_{b}M²_{c})_{1-d}M³_{d} (I)
wobei
M³ ausgewählt ist aus Mn und Co,
a in dem Bereich von 0,95 bis 0,995 liegt,
b in dem Bereich von 0,002 bis 0,04 liegt,
c in dem Bereich von 0,002 bis 0,02 liegt und
d in dem Bereich von null bis 0,02 liegt, $a + b + c = 1 .$

3. Partikelmaterial gemäß Anspruch 2, wobei d null ist.

4. Partikelmaterial gemäß einem der vorstehenden Ansprüche, wobei M¹ Zr oder Ti ist und M² Al ist.

5. Partikelmaterial gemäß einem der Ansprüche 1 bis 3, wobei M¹ Ta oder Nb ist und M² Al oder B ist.

6. Partikelmaterial gemäß einem der vorstehenden Ansprüche, wobei das Material eine integrale Peakbreite ^{2.Laden}IPW_{4,1-4,25 V} in der Differenzkapazität-Auftragung (dQ)/(dV) von wenigstens 25 mV zwischen 4,1 und 4,25 V bei dem zweiten Ladezyklus bei 0,2 C-Rate aufweist.

7. Partikelmaterial gemäß einem der vorstehenden Ansprüche, wobei das Material mit einem Metalloxid beschichtet ist.

8. Partikelmaterial gemäß einem der vorstehenden Ansprüche, wobei b ≤ c.

9. Verfahren zur Herstellung eines Partikelmaterials gemäß einem der Ansprüche 1 bis 8, wobei das Verfahren die folgenden Schritte umfasst:
(a) Bereitstellen eines partikelförmigen Nickelhydroxids, Nickel(II)-oxids oder Nickeloxyhydrids,
(b) Behandeln des Nickeloxids/hydroxids oder -oxyhydroxids mit einer oder zwei Lösungen von Verbindungen M¹ und M²,
(c) gegebenenfalls Entfernen des/der Lösungsmittel(s) aus Schritt (b),
(d) Zugeben einer Quelle von Lithium,
(e) Wärmebehandeln des bei Schritt (d) erhaltenen Gemischs.

10. Verfahren gemäß Anspruch 9, wobei Schritt (e) bei einer Höchsttemperatur in dem Bereich von 650 bis 750 °C durchgeführt wird.

11. Verfahren gemäß Anspruch 9 oder 10, wobei Schritt (c) durch ein Fest-Flüssig-Trennverfahren durchgeführt wird.

## Revendications

1. Matériau particulaire de la composition Li₁₊ₓTM₁₋ₓO₂,
x étant dans la plage allant de -0,02 à + 0,05,
TM comprenant au moins 93 % en moles de nickel et
(A) au moins un élément M¹, M¹ étant choisi parmi Nb, Ta, Ti, Zr, W et Mo,
(B) au moins un élément M², M² étant choisi parmi B, AI, Mg et Ga,
ledit matériau particulaire est composé de particules secondaires sphériques agglomérats de particules primaires, et
ledit matériau particulaire ayant un diamètre moyen de particule (D50) dans la plage allant de 2 à 20 µm.

2. Matériau particulaire selon la revendication 1, TM étant une combinaison de métaux selon la formule générale (I)
(NiₐM¹_{b}M¹_{c})_{1-d}M³_{d} (1)
M³ étant choisi parmi Mn et Co,
a étant dans la plage allant de 0,95 à 0,995,
b étant dans la plage allant de 0,002 à 0,04,
c étant dans la plage allant de 0,002 à 0,02, et
d étant dans la plage allant de zéro à 0,02, $a + b + c = 1 .$

3. Matériau particulaire selon la revendication 2, d étant zéro.

4. Matériau particulaire selon l'une quelconque des revendications précédentes, M¹ étant Zr ou Ti et M² étant AI.

5. Matériau particulaire selon l'une quelconque des revendications 1 à 3, M¹ étant Ta ou Nb et M² étant Al ou B.

6. Matériau particulaire selon l'une quelconque des revendications précédentes, ledit matériau ayant une largeur de pic d'intégrale ^{2e charge}IPW_{4,1 - 4,25 V} dans le tracé de capacité différentielle (dQ)/(dV) d'au moins 25 mV entre 4,1 et 4,25 V dans le deuxième cycle de charge à une vitesse 0,2 C.

7. Matériau particulaire selon l'une quelconque des revendications précédentes, ledit matériau étant revêtu par un oxyde métallique.

8. Matériau particulaire selon l'une quelconque des revendications précédentes, dans lequel b ≤ c.

9. Processus pour la fabrication d'un matériau particulaire selon l'une quelconque des revendications 1 à 8, ledit processus comprenant les étapes suivantes :
(a) mise à disposition d'un hydroxyde de nickel, d'un oxyde de nickel (II) ou d'un oxyhydroxyde de nickel particulaire,
(b) traitement dudit oxyde/hydroxyde ou oxyhydroxyde de nickel avec une ou deux solutions de composés de M¹ et M²,
(c) éventuellement, élimination du ou des solvants de l'étape (b),
(d) ajout d'une source de lithium,
(e) traitement de manière thermique du mélange obtenu de l'étape (d).

10. Processus selon la revendication 9, l'étape (e) étant réalisée à une température maximale dans la plage allant de 650 à 750 °C.

11. Processus selon la revendication 9 ou 10, l'étape (c) étant réalisée par un procédé de séparation solide-liquide.
